# EUROPÄISCHE PATENTSCHRIFT

(11) **EP 2 438 722 B1**
(45) Veröffentlichungstag und Bekanntmachung des Hinweises auf die Patenterteilung: **02.04.2014**
(21) Anmeldenummer: 10726899.7
(22) Anmeldetag: 01.06.2010
(51) Int. Cl.: H04L 12/66, H04L 29/06

(54) **DATENÜBERMITTLUNGSGERÄT ZUR FERNÜBERWACHUNG UND -STEUERUNG EINES VERTEILTEN PROZESSSYSTEMS**
DATA TRANSFER DEVICE FOR REMOTE-CONTROL AND REMOTE-MONITORING OF A DISTRIBUTED PROCESSING SYSTEM
APPAREIL DE TRANSFERT DES DONNEES POUR LA SURVEILLANCE ET LE CONTROLE D'UN SYSTEME DE PROCEDE DISTRIBUE

(30) Priorität: 04.06.2009 DE 102009023949
(43) Veröffentlichungstag der Anmeldung: 11.04.2012
(73) Patentinhaber: ABB Technology AG, 8050 Zürich (CH)
(72) Erfinder: GROSS, Peter, 68167 Mannheim (DE)
(74) Vertreter: Kock, Ina
(86) Internationale Anmeldenummer: PCT/EP2010/003304
(87) Internationale Veröffentlichungsnummer: WO 2010/139447

(56) Entgegenhaltungen:
- EP-A1- 1 976 218
- WO-A1-2007/071212
- KEZUNOVI M ET AL: "Automated Monitoring and Control Using New Data Integration Paradigm" PROCEEDINGS OF THE 38 TH HAWAII INTERNATIONAL ON SYSTEM SCIENCE, 3. Januar 2005 (2005-01-03), Seiten 1-10, XP010762451
- BRAND K-P ED - ZOBAA A: "The standard IEC 61850 as prerequisite for intelligent applications in substations" POWER ENGINEERING SOCIETY GENERAL MEETING, 2004. IEEE, IEEE, PISCATAWAY, NJ, USA, 6. Juni 2004 (2004-06-06), Seiten 714-718, XP010756486 DOI: 10.1109/PES.2004.1372909 ISBN: 978-0-7803-8465-1
- ANONYMOUS: "IEC 61850-8-1: Communication networks and systems in substations. Part 8-1: Specific Communications Service Mapping (SCSM)- Mappings to MMS" IEC, 2004, XP002607289 Switzerland

## Beschreibung

Die Erfindung bezieht sich auf ein Fernwirkgerät zur Anbindung eines unterlagerten Prozesses an ein Stationsleitsystem gemäß Anspruch 1, welches insbesondere zur Überwachung und Steuerung des Prozesses in entfernten Stationen vorgesehen ist. Das Fernwirkgerät tauscht mit wenigstens einer übergeordneten Kommunikationseinheit Daten aus und ist mit dem unterlagerten Prozess verbunden.

Außerdem bezieht sich die Erfindung auf Verwendungsmöglichkeiten des Fernwirkgerätes.

Fernwirkgeräte zur Überwachung und Steuerung von lokalen sowie unterlagerten Prozessen kommunizieren über eine Kommunikationsverbindung, beispielsweise ein Netzwerk, mit einer übergeordneten Prozessführungsebene, auch als Leitstelle bezeichnet, und mit dem Prozess verbundenen unterlagerten Systemen.

Die Kommunikation in Systemen zur Übertragung elektrischer Energie, wie beispielsweise eine Nachrichtenübermittlung zwischen verschiedenen Geräten, wie Schutzgeräten, Schaltgeräten, Transformatoren usw., wird über einen Kommunikationsstandard IEC 61850 ausgeführt, was beispielsweise in der EP 1 976 281 A1 beschrieben ist. Zum Datenaustausch innerhalb des Systems ist es erforderlich, dass Geräte, die nicht gemäß der IEC 61850 arbeiten, mittels verschiedener Baugruppen an das üblicherweise als Datenbus ausgeführte Netzwerk, anzubinden. Die dazu erforderlichen Baugruppen, wie Gateways, beispielsweise zur Umwandlung der ankommenden Daten in ein IEC 61850 kompatibles Format, IED- (Intellegent-Electronic-Device)- Protokoll- Converter, Geräte zur Anbindung an übergeordnete Kommunikationseinheiten, wie die Netzleitstelle, oder Ein/-Ausgabegeräte zur direkten Prozessankopplung und deren Funktionsweise sind beispielsweise in der WO 2005/055538 A1 beschrieben.

Die WO 2007/071212 beschreibt ein Gateway, welches in einer Schaltanlagenleittechnik-Anordnung eingesetzt wird zur Ermöglichung einer Datenverbindung zwischen einer Leittechnikeinrichtung, die nach dem IEC61850 Standard arbeitet, und einem elektrischen Gerät, welches nicht mit dem IEC61850 Standard kompatibel ist.

Insbesondere eine Anbindung vorhandener Geräte an das nach dem IEC 61850 Standard arbeitende Kommunikationsnetzwerk mittels der vorab genannten Baugruppen ist mit einem nicht unerheblichen Hardware- und Konfigurationsaufwand verbunden.

Der Erfindung liegt daher die Aufgabe zugrunde, ein Datenübermittlungsgerät zur Fernüberwachung und -steuerung eines verteilten Prozesssystems, insbesondere ein Fernwirkgerät der eingangs genannten Art, anzugeben, welches die vorgenannten Nachteile vermeidet, und insbesondere den Konfigurations- und Hardwareaufwand innerhalb des verteilten Systems reduziert.

Diese Aufgabe wird durch ein Fernwirkgerät mit den im Anspruch 1 angegebenen Merkmalen gelöst. Vorteilhafte Ausgestaltungen des erfindungsgemäßen Datenübermittlungsgerätes sind in weiteren Ansprüchen angegeben.

Mit der Erfindung wird demnach ein Datenübermittlungsgerät, auch als Remote Terminal Unit (RTU) oder Fernwirkgerät bezeichnet, zur Anbindung eines unterlagerten Prozesses an ein Stationsleitsystem mit den Merkmalen des Anspruchs 1 vorgeschlagen. Das Fernwirkgerät kann zur Fernüberwachung und -steuerung des Prozesses innerhalb eines verteilten Systems dienen, insbesondere zur Überwachung und Steuerung des Prozesses in entfernten Stationen.

Im Fernwirkgerät, im Folgenden auch Datenübermittlungsgerät genannt, sind folgende als Schnittstellen ausgebildete Funktionseinheiten zur Anbindung des Prozesses an eine übergeordnete Kommunikationseinheit gemäß dem Standard IEC 61850 integriert:
- wenigstens ein IEC61850 Server zur die Anbindung an übergeordnete Kommunikationseinheiten,
- wenigstens ein IEC61850 Client, beispielsweise zur Anbindung einer Unterstation über einen Stationsbus, wobei der IEC61850 Client über einen Stationsbus mittels auf einem Netzwerkstandard basierenden Protokollen, wie beispielsweise dem auf TCP/IP- Protokoll (Transmission Control Protocol/ Internet Protocol), mit einer untergeordneten Stationsebene kommuniziert,
- wenigstens eine Einheit zur Anbindung der übergeordnete Kommunikationseinheit, wie beispielsweise einer übergeordneten Prozessführungsebene, einer Netzleitstelle oder von Gateways und zur Anbindung von intelligenten elektronischen Geräten (IEDs), wie beispielsweise von Schutz- und Steuergeräten, mittels weiterer, beispielsweise TCP/IP und seriell basierter Netzwerkprotokolle, auch als Protokoll- Gateways bezeichnet, sowie
- wenigstens eine weitere Einheit zur direkten Prozessankopplung für den Anschluss von Steuer- und Kontrollsignalen an einen IEC61850 Stationsbus.

Dadurch, dass die Funktionseinheiten zur Anbindung des Prozesses an die übergeordneten Kommunikationseinheiten gemäß dem Standard IEC 61850 in einem einzi gen Gerät realisiert sind, lässt sich in vorteilhafter Weise eine kostengünstige Integration und Anbindung des unterlagertem Prozesses in Stationsleitsystemen erreichen. Insbesondere entfällt die externe Verbindung zwischen dem IEC61850 Client, dem IEC61850 Server, den Protokoll- Gateways und den weiteren Einheiten zur direkten Prozessankopplung über den Stationsbus, da alle diese Funktionen nunmehr in einem einzigen Gerät integriert sind.

Die damit realisierte Hybridanwendung innerhalb der Remote Terminal Unit ermöglicht ihren Einsatz im Rahmen eines auf der Basis des Standards IEC61850 arbeitenden Stationsbusses des Stationsleitsystems zu den folgenden Zwecken:
- Anbindung vorhandener serieller bzw. nicht IEC61850 kompatibler IED's, insbesondere von Schutz- und Steuergeräten an den IEC 61850 Stationsbus.
- Realisierung einer Anbindung zwischen zwei IEC61850 Stationsbussen innerhalb des Netzwerks im verteilten System
- Realisierung einer direkten Prozessanschaltung zum den Anschluss von Steuer- und Kontrollgeräten an den IEC61850 Stationsbus.

Als vorteilhafte Ausgestaltung ist außerdem vorgesehen, in der Remote Terminal Unit eine weitere Einheit zu integrieren, deren Funktionalität dafür vorgesehen ist, Steuerungsaufgaben mittels integrierter SPS-Funktionalität auszuführen und beispielsweise logische und projektspezifische Anpassungen innerhalb des Systems durchzuführen.

Das erfindungsgemäße Datenübermittlungsgerät ist vorzugsweise zum Einsatz in Fernwirkunterstationen, in Fernwirkknoten, in der Stationsleittechnik und in Kommunikationsnetzen, die vorzugsweise auf der Basis des IEC60870 und/oder DNP3 Standards arbeiten, vorgesehen und kann in vorteilhafter Weise den Datenaustausch zwischen dem unterlagertem Prozess und den übergeordneten Kommunikationseinheiten über eine Web-Verbindung realisieren.

Eine weitere Erläuterung der Erfindung sowie deren Vorteile und Ausgestaltungen ergeben sich aus der nachstehenden Beschreibung von Ausführungsbeispielen anhand der folgenden Figuren.

Es zeigen:
- **Fig.1**: ein Blockschaltbild eines beispielhaften Datenübermittlungsgerätes, welches in das Stationsleitsystem eines Energieübertragungssystems eingebunden ist,
- **Fig. 2**: ein Blockschaltbild des Datenübermittlungsgerätes, welches die interne Übertragung von Nachrichtentelegrammen zwischen den Funktionseinheiten darstellt, und
- **Fig. 3**: ein weiteres Blockschaltbild des Datenübermittlungsgerätes, welches die interne Übertragung von Kommandotelegrammen zwischen den Funktionseinheiten verdeutlicht.

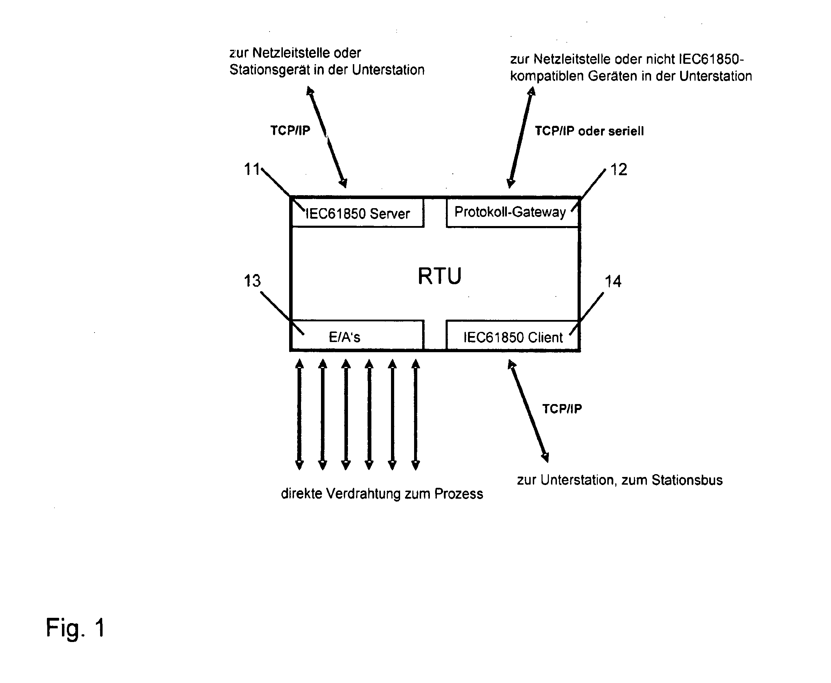

**Fig. 1** zeigt ein Datenübermittlungsgerät RTU, welches in ein System zur Überwachung und Steuerung eines Prozesses in entfernten Stationen integrierbar ist. Im Datenübermittlungsgerät RTU sind dazu Funktionseinheiten, auch als Schnittstellen bezeichnet, zum Prozess sowie zur Kommunikation gemäß einem Standard IEC 61850 über ein Netzwerk mit wenigstens einer übergeordneten Kommunikationseinheit vorgesehen.

Das Datenübermittlungsgerät RTU weist eine erste als IEC61850 Server ausgeführte Funktionseinheit 11 zur Kommunikation gemäß dem Standard IEC 61850 über eine Kommunikationsverbindung mit einem zentralen Stationsgerät, beispielsweise einem Stations-Gateway oder einer übergeordneten Prozessführungsebene oder Leitstelle und eine zweite Funktionseinheit 13 zur direkten Verdrahtung mit dem unterlagertem Prozess auf. Die Kommunikation zwischen dem Datenübermittlungsgerät RTU und der übergeordneten Prozessführungsebene wird über den IEC61850 Server 11 in vorteilhafter Weise mittels eines Netzwerkprotokolls, vorzugsweise über ein TCP/IP Protokoll, ausgeführt. Die zweite Funktionseinheit 13 weist zur direkten Prozessankopplung binäre und/oder analoge Ein- und/oder Ausgänge auf, denen Steuer- und Kontrollsignale aus dem Prozess zugeführt und für eine Ankopplung an den auf der Basis des IEC61850 Standards arbeitenden Stationsbusses aufbereitet werden.

Eine weitere Funktionseinheit 14 ist über einen Stationsbus mit einer Unterstation verbunden und kommuniziert über auf dem TCP/IP- Netzwerkstandard basierenden ICE61850 Protokollen mit der daran angeschlossenen Unterstation.

Weiterhin ist im Datenübermittlungsgerät RTU eine als Protokoll- Gateway ausgeführte Funktionseinheit 12 zur Anbindung der übergeordnete Kommunikationseinheit, wie beispielsweise Prozessführungsebenen, Netzleitstellen oder Gateways, mittels TCP/IP und/oder seriell basierten Protokollen und zur Anbindung von intelligenten elektronischen Geräten (IEDs), wie beispielsweise von Schutz- und Steuergeräten, mittels weiterer TCP/IP und seriell basierter Protokolle, auch als Protokoll- Gateways bezeichnet, vorgesehen.

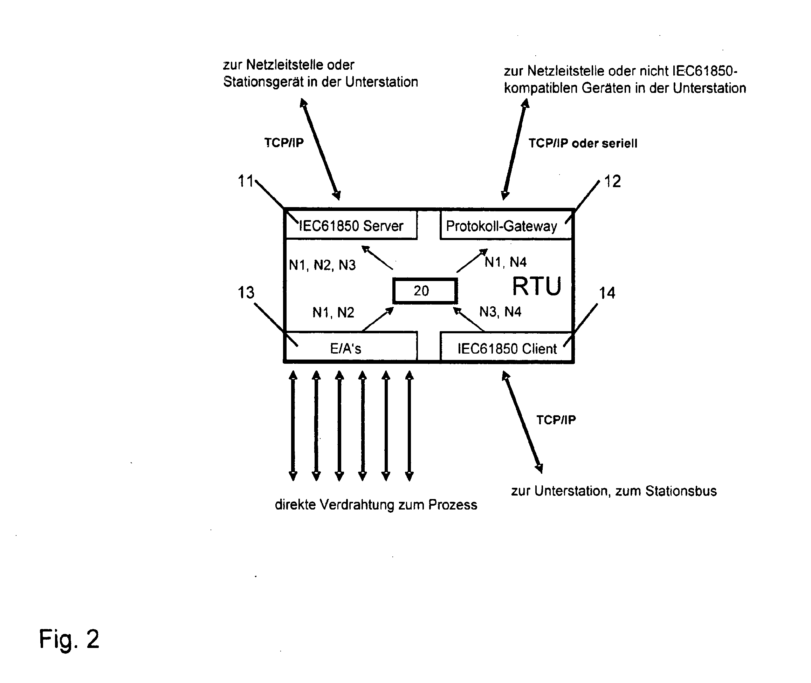

**Fig. 2** zeigt ein Blockschaltbild des beispielhaften Datenübermittlungsgerätes RTU, welches die interne Übertragung von Nachrichtentelegrammen N1, N2, N3, N4 zwischen den Funktionseinheiten 11, 12, 13, 14 darstellt. Dazu ist im Datenübermittlungsgerät RTU eine konfigurierbare Filterfunktion 20 vorgesehen, die den Datenaustausch zwischen den Funktionseinheiten 11, 12, 13, 14 koordiniert.

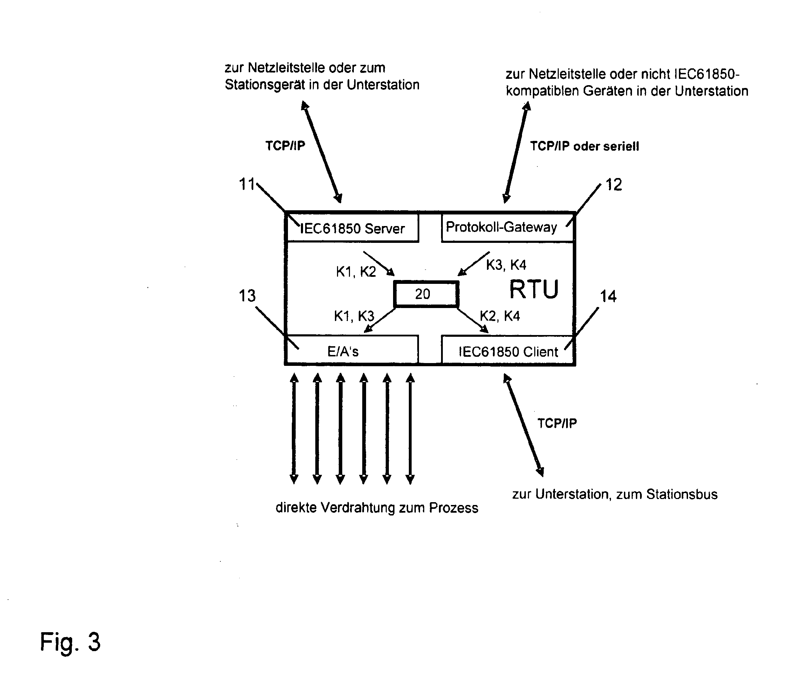

Die Filterfunktion 20 ist dafür vorgesehen, dass Nachrichtentelegramme N1, N2, N3, N4 für Meldungen, die in **Fig. 2** beispielhaft gezeigt sind, und Kommandotelegramme K1, K2, K3, K4, für Steuerbefehle, die beispielhaft in **Fig. 3** gezeigt sind, gezielt zu filtern. Dazu sind in der Konfiguration der Filterfunktion 20 Filterregeln abgelegt, welche den Kommunikationsweg der Telegramme N1, N2, N3, N4, K2, K3, K4 innerhalb des Datenübermittlungsgerätes RTU festlegen, also zu welcher Funktionseinheit 11, 12, 13, 14 die jeweiligen Telegramme zu übertragen sind.

Die Telegramme N1, N2, N3, N4, K2, K3, K4 werden entsprechend ihrer Melderichtung gemäß der vorab konfigurierten Filterregeln innerhalb des Datenübermittlungsgerätes RTU an die jeweils über die in den Filterregeln festgelegten Übertragungswege an die als Empfänger arbeitenden Funktionseinheiten 11, 12, 13, 14 übertragen. Wie **Fig. 2** veranschaulicht, wird beispielsweise das Nachrichtentelegramm N1 aus der Funktionseinheit 13 zur direkten Prozessanschaltung entsprechend der in der Filterfunktion 20 abgelegten Filterregeln sowohl an den IEC61850 Server 11 als auch an den Protokoll- Gateway 12 weitergeleitet. Hingehen wird das Nachrichtentelegramm N2 aus der Funktionseinheit 13 nur an den IEC61850 Server 11 gesendet. Die Filterregeln gelten analog auch für den IEC61850 Client 14 in der RTU.

**Fig. 3** zeigt ein weiteres Blockschaltbild des Datenübermittlungsgerätes RTU, welches die interne Übertragung von Kommandotelegrammen K1, K2, K3, K4 zwischen den Funktionseinheiten 11, 12, 13, 14 verdeutlicht.

Für die mittels der Kommandotelegramme K1, K2, K3, K4 übertragenen Befehle wird ebenfalls mit in der Filterfunktion 20 vorab festgelegten Filterregeln die jeweilige Empfängerfunktionseinheit 11, 12, 13, 14 festgelegt. Beispielsweise wird das Kommandotelegramm K1 vom IEC61850 Server 11 über die Filterfunktion (20) und die Funktionseinheit 13 der direkten Prozessanschaltung zugeführt. Hingegen wird das Kommandotelegramm K2 über die Filterfunktion dem IEC61850 Client 14 zugeführt.

Die dargestellte Möglichkeit zur Filterung der Nachrichten- und/oder Kommandotelegramme N1, N2, N3, N4, K1, K2, K3, K4 ist durch eine SPS- Funktion erweiterbar. Dazu ist im Datenübermittlungsgerät RTU eine weitere Einheit zur Ausführung von Steuerungsaufgaben mittels integrierter SPS-Funktionalität integriert.

Mit dem erfindungsgemäßen Datenerfassungsgerät RTU sind nunmehr in vorteilhafter Weise sowohl Gateways, Anbindungen an weitere Unterstationen, auch als Proxy-Lösungen bezeichnet, als auch klassische Fernwirkkopfanwendungen mit direkter Prozessankopplung in einem Gerät realisiert, wodurch eine Verringerung der Anzahl der Baugruppen sowie ein reduzierter Konfigurierungsaufwand für die Anschaltung der Prozesssignale im verteilten System erreicht wird.

## Patentansprüche

1. Fernwirkgerät zur Anbindung eines unterlagerten Prozesses an ein Stationsleitsystem, wobei das Fernwirkgerät mit wenigstens einer übergeordneten Kommunikationseinheit Daten austauscht und mit dem unterlagerten Prozess verbunden ist, **dadurch gekennzeichnet, dass** das Stationsleitsystem auf der Basis des Standards IEC61850 arbeitet und dass im Fernwirkgerät folgende als Schnittstellen ausgebildete Funktionseinheiten (11, 12, 13, 14) zur Anbindung des Prozesses an die wenigstens eine übergeordnete Kommunikationseinheit gemäß dem Standard IEC 61850 integriert sind:
- wenigstens einen IEC61850 Server (11) zur Anbindung an die übergeordnete Kommunikationseinheit,
- wenigstens einen IEC61850 Client (14) zur Anbindung einer untergeordneten Stationsebene über einen IEC61850 Stationsbus,
- wenigstens eine als Protokoll-Gateway ausgeführte Funktionseinheit (12) zur Anbindung der übergeordneten Kommunikationseinheit und/oder zur Anbindung von intelligenten elektronischen Geräten mittels weiterer Netzwerkprotokolle, und
- wenigstens eine weitere Einheit (13) mit binären und/oder analogen Ein- und/oder Ausgängen zur direkten Prozessankopplung für den Anschluss von Steuer- und Kontrollsignalen an den genannten oder einen anderen IEC61850 Stationsbus.

2. Fernwirkgerät nach einem der vorstehenden Ansprüche, **dadurch gekennzeichnet, dass** im Fernwirkgerät eine weitere Einheit zur Ausführung von Steuerungsaufgaben mittels integrierter SPS-Funktionalität integriert ist.

3. Fernwirkgerät nach einem der vorstehenden Ansprüche, **dadurch gekennzeichnet, dass** die als Protokoll-Gateway ausgeführte Funktionseinheit (12) auf der Basis von TCP/IP- und/oder seriellen Protokollen arbeitet.

4. Fernwirkgerät nach einem der vorstehenden Ansprüche, **dadurch gekennzeichnet, dass** über das Fernwirkgerät und die als Protokoll-Gateway ausgeführte Funktionseinheit (12) nicht IEC61850 kompatible elektronische Geräte, wie beispielsweise Schutz- und Steuergeräte, an den IEC61850 Stationsbus anschließbar sind.

5. Fernwirkgerät nach einem der vorstehenden Ansprüche, **dadurch gekennzeichnet, dass** über das Fernwirkgerät und die Funktionseinheiten (11, 12, 14) zwei IEC61850 Stationsbusse miteinander kommunizieren.

6. Fernwirkgerät nach einem der vorstehenden Ansprüche, **dadurch gekennzeichnet, dass** über das Fernwirkgerät Steuer- und Kontrollgeräte an den IEC61850 Stationsbus direkt anschließbar sind.

7. Fernwirkgerät nach einem der vorstehenden Ansprüche, **dadurch gekennzeichnet, dass** im Fernwirkgerät eine konfigurierbare Filterfunktion (20) vorgesehen ist, welche den Datenaustausch zwischen den Funktionseinheiten (11, 12, 13, 14) koordiniert.

8. Fernwirkgerät nach Anspruch 7, **dadurch gekennzeichnet, dass** in der Konfiguration der Filterfunktion (20) Filterregeln abgelegt sind, welche den Kommunikationsweg zwischen den Funktionseinheiten (11, 12, 13, 14) innerhalb des Fernwirkgerätes festlegen.

9. Fernwirkgerät nach einem der vorstehenden Ansprüche, **dadurch gekennzeichnet, dass** das Fernwirkgerät den Datenaustausch über eine Web-Verbindung, vorzugsweise mittels TCP/IP-Protokoll, mit der übergeordneten Kommunikationseinheit realisiert.

10. Verwendung des Fernwirkgerätes nach einem der vorstehenden Ansprüche in einer Fernwirkunterstation, in einer Stationsleittechnik, in einem Fernwirkknoten oder in einem Kommunikationsnetz, die auf der Basis des IEC60870 Standards arbeiten.

## Claims

1. Telecontrol device for connecting a subordinate process to a station control system, the telecontrol device interchanging data with at least one superordinate communication unit and being connected to the subordinate process, **characterized in that** the station control system operates on the basis of the IEC61850 standard, and **in that** the following functional units (11, 12, 13, 14) which are in the form of interfaces and are intended to connect the process to the at least one superordinate communication unit according to the IEC61850 standard are integrated in the telecontrol device:
- at least one IEC61850 server (11) for connection to the superordinate communication unit,
- at least one IEC61850 client (14) for connecting a subordinate station level via an IEC61850 station bus,
- at least one functional unit (12) which is in the form of a protocol gateway and is intended to connect the superordinate communication unit and/or to connect intelligent electronic devices using further network protocols, and
- at least one further unit (13) having binary and/or analogue inputs and/or outputs for direct process coupling for connecting control and monitoring signals to said IEC61850 station bus or to another IEC61850 station bus.

2. Telecontrol device according to one of the preceding claims, **characterized in that** a further unit for carrying out control tasks using an integrated PLC functionality is integrated in the telecontrol device.

3. Telecontrol device according to one of the preceding claims, **characterized in that** the functional unit (12) in the form of the protocol gateway operates on the basis of TCP/IP and/or serial protocols.

4. Telecontrol device according to one of the preceding claims, **characterized in that** electronic devices which are not compatible with IEC61850, for example protective and control devices, can be connected to the IEC61850 station bus via the telecontrol device and the functional unit (12) in the form of the protocol gateway.

5. Telecontrol device according to one of the preceding claims, **characterized in that** two IEC61850 station buses communicate with one another via the telecontrol device and the functional units (11, 12, 14).

6. Telecontrol device according to one of the preceding claims, **characterized in that** control and monitoring devices can be directly connected to the IEC61850 station bus via the telecontrol device.

7. Telecontrol device according to one of the preceding claims, **characterized in that** a configurable filter function (20) which coordinates the interchange of data between the functional units (11, 12, 13, 14) is provided in the telecontrol device.

8. Telecontrol device according to Claim 7, **characterized in that** filter rules which stipulate the communication path between the functional units (11, 12, 13, 14) inside the telecontrol device are stored in the configuration of the filter function (20).

9. Telecontrol device according to one of the preceding claims, **characterized in that** the telecontrol device interchanges data with the superordinate communication unit via a web connection, preferably using the TCP/IP protocol.

10. Use of the telecontrol device according to one of the preceding claims in a telecontrol substation, in station control technology, in a telecontrol node or in a communication network which operate on the basis of the IEC60870 standard.

## Revendications

1. Appareil d'action à distance destiné à raccorder une opération subordonnée à un système de guidage de station, l'appareil d'action à distance échangeant des données par au moins une unité de communication prioritaire et étant raccordé à l'opération subordonnée,
**caractérisé en ce que**
le système de guidage de station travaille sur base de la norme IEC61850 et **en ce que** les unités fonctionnelles (11, 12, 13, 14) suivantes, configurées comme interfaces, sont intégrées dans l'appareil d'action à distance pour raccorder l'opération à la ou aux unités de communication prioritaires selon la norme IEC61850 :
au moins un serveur IEC61850 (11) raccordé à l'unité de communication prioritaire,
au moins un client IEC61850 (14) raccordé à un niveau subordonné de la station par l'intermédiaire d'un bus de station IEC61850,
au moins une unité fonctionnelle (12) configurée sous la forme de portail de protocole, qui raccorde l'unité de communication prioritaire et/ou qui raccorde des appareils électroniques intelligents au moyen d'autres protocoles de réseau et
au moins une autre unité (13) dotée d'entrées et/ou de sorties binaires et/ou analogiques pour raccorder directement l'opération en vue de raccorder des signaux de commande et de contrôle audit bus de station IEC61850 ou à un autre bus de station.

2. Appareil d'action à distance selon la revendication précédente, **caractérisé en ce qu'**une autre unité servant à exécuter des tâches de commande est intégrée dans l'appareil d'action à distance au moyen d'une fonction SPS intégrée.

3. Appareil d'action à distance selon l'une des revendications précédentes, **caractérisé en ce que** l'unité fonctionnelle (12) configurée comme portail de protocole travaille sur la base de protocoles TCP/IP et/ou de protocoles série.

4. Appareil d'action à distance selon l'une des revendications précédentes, **caractérisé en ce que** l'appareil d'action à distance et l'unité fonctionnelle (12) configurée comme portail de protocole permettent de raccorder au bus de station IEC61850 des appareils électroniques non compatibles avec la norme IEC61850, par exemple des appareils de protection et de commande.

5. Appareil d'action à distance selon l'une des revendications précédentes, **caractérisé en ce que** deux bus de station IEC61850 communiquent l'un avec l'autre par l'intermédiaire de l'appareil d'action à distance et des unités fonctionnelles (11, 12, 14).

6. Appareil d'action à distance selon l'une des revendications précédentes, **caractérisé en ce que** des appareils de commande et de contrôle peuvent être raccordés directement au bus de station IEC61850 par l'intermédiaire de l'appareil d'action à distance.

7. Appareil d'action à distance selon l'une des revendications précédentes, **caractérisé en ce qu'**une fonction de filtrage (20) configurable qui coordonne l'échange de données entre les unités fonctionnelles (11, 12, 13, 14) est prévue dans l'appareil d'action à distance.

8. Appareil d'action à distance selon la revendication 7, **caractérisé en ce que** des règles de filtrage qui définissent le parcours de communication entre les unités fonctionnelles (11, 12, 13, 14) à l'intérieur de l'appareil d'action à distance sont définies dans la configuration de la fonction de filtrage (20).

9. Appareil d'action à distance selon l'une des revendications précédentes, **caractérisé en ce que** l'appareil d'action à distance réalise l'échange de données par une liaison web, de préférence au moyen du protocole TCP/IP, avec l'unité de communication prioritaire.

10. Utilisation de l'appareil d'action à distance selon l'une des revendications précédentes dans un sous-poste d'action à distance, dans une technique de guidage de station, dans un noeud d'action à distance ou dans un réseau de communication qui travaillent sur la base de la norme IEC60870.
